(19) Europäisches Patentamt
European Patent Office
Office européen des brevets

(11) **EP 4 610 710 A1**

(12) **EUROPEAN PATENT APPLICATION**

(43) Date of publication:
**03.09.2025 Bulletin 2025/36**

(21) Application number: **25150153.2**

(22) Date of filing: **03.01.2025**

(51) International Patent Classification (IPC):
**G02B 21/06** (2006.01)     **G02B 21/36** (2006.01)

(52) Cooperative Patent Classification (CPC):
**G02B 21/367; G02B 21/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.02.2024 KR 20240030090**

(71) Applicants:
• **Tomocube, Inc.**
**Daejeon 34109 (KR)**

• **Korea Advanced Institute of Science and Technology**
**Daejeon 34141 (KR)**

(72) Inventors:
• **PARK, YongKeun**
**34109 Daejeon (KR)**
• **HUGONNET, Herve Jerome**
**34141 Daejeon (KR)**
• **CHUNG, Yoonjae**
**34141 Daejeon (KR)**

(74) Representative: **Boco IP Oy Ab**
**Kansakoulukatu 3**
**00100 Helsinki (FI)**

(54) **METHOD AND DEVICE OF FOURIER SPACE ABERRATION CORRECTION FOR HIGH RESOLUTION REFRACTIVE INDEX IMAGING USING INCOHERENT LIGHT**

(57)     Disclosed is a method and device for Fourier space aberration correction for three-dimensional (3D) high-resolution refractive index using incoherent light, which may measure each of light intensities transmitted from a specimen under at least two illumination patterns using an incoherent light source, may extract Fourier space aberration information from overlapping information of the measured light intensities, and may correct the Fourier space aberration information for an original tomogram acquired using the incoherent light source and generate the corrected tomogram.

FIG. 6

Start

→

Measure each of light intensities transmitted from specimen under at least two illumination patterns using incoherent light source — 210

↓

Extract Fourier space aberration information from overlapping information of measured light intensities — 220

↓

Correct Fourier space aberration information for original tomogram acquired using incoherent light source and generate corrected tomogram — 230

↓

End

EP 4 610 710 A1

**Description**

BACKGROUND

1. Field of the Invention

Example embodiments relate to a method and device for Fourier space aberration correction for high-resolution refractive index imaging (RI imaging) using incoherent light.

2. Description of the Related Art

The fundamental goal of an optical system is to achieve theoretical resolution by diffraction limit. A microscope is susceptible to image quality degradation due to even small misalignment in its components and precise alignment of precisely polished lenses is required for high-resolution imaging. In addition to aberrations caused by mechanical alignment, aberrations caused by a specimen itself may also significantly degrade the image quality of the microscope. Fourier space aberration is a type of monochromatic aberration and does not include aberration such as distortion or curvature of field, but has a significant effect on resolution so is very important in microscopy. Also, many complex aberrations may be expressed as aberrations of spatially variable Fourier space. Therefore, effectively measuring and correcting such Fourier space aberration is essential to improve imaging quality.

Recent advancement in quantitative phase imaging (QPI) techniques has been applied in various application fields, such as biological and medical imaging, using label-free imaging and quantitative analysis capability. Among these, phase deconvolution microscopy may be implemented as an optical system with a simpler structure using an incoherent light source. This method is notably resilient to noise and vibration, especially when compared to other QPI methods that rely on interferometry with coherent light sources. Due to simplicity and robustness of the optical system, this method is applied in label-free three-dimensional (3D) quantitative imaging of various thick biological samples, such as live Caenorhabditis elegans and renal cancer tissues.

The significance of aberration correction in microscopy has led to the development of numerous correction methods for QPI techniques. These include algorithms for imaging thin samples including two-dimensional (2D) differential phase contrast microscopy and ptychography. Other aberration correction methods have been implemented, such as a method of using background subtraction and lateral shift images, a 3D angle scanning method, and a deep-learning-based aberration enhancement. However, some techniques require a process of measuring system aberrations through separate pre-imaging under specific experimental conditions. While aberration correction and adaptive optics techniques are well established in fluorescence microscopy, their direct application to QPI is not straightforward.

SUMMARY

Example embodiments provide a method and device for Fourier space aberration correction for high-resolution refractive index using incoherent light.

According to an aspect, there is provided a method for Fourier space aberration correction for three-dimensional (3D) high-resolution refractive index imaging using incoherent light of a computer device, the method including measuring each of light intensities transmitted from a specimen under at least two illumination patterns using an incoherent light source; extracting Fourier space aberration information from overlapping information of the measured light intensities; and correcting the Fourier space aberration information for an original tomogram acquired using the incoherent light source and generating the corrected tomogram.

According to an aspect, there is provided a device for Fourier space aberration correction for 3D high-resolution refractive index imaging using incoherent light, the device including a memory; and a processor configured to connect to the memory and to execute at least one instruction stored in the memory, and the processor may be configured to measure each of light intensities transmitted from a specimen under at least two illumination patterns using an incoherent light source, to extract Fourier space aberration information from overlapping information of the measured light intensities, and to correct the Fourier space aberration information for an original tomogram acquired using the incoherent light source and generate the corrected tomogram.

The present disclosure addresses critical limitations in current microscopy techniques and is particularly essential in analyzing thick tissue samples in which aberrations may significantly distort imaging results. By leveraging redundant information from various illumination patterns, the present disclosure ensures more accurate aberration correction that is crucial for detailed and reliable analysis in biological and medical research. The present disclosure is suitable for complex 3D samples to which traditional methods may not apply, and provides precise and deep insight into 3D structure and dynamics of samples.

BRIEF DESCRIPTION OF THE DRAWINGS

These and/or other aspects, features, and advantages of the invention will become apparent and more readily appreciated from the following description of embodiments, taken in conjunction with the accompanying drawings of which:

FIG. 1A schematically illustrates an optical setup that represents an optical path through system components according to an example embodiment;

FIG. 1B illustrates an aberration extraction process in which a gradient descendent algorithm iteratively refines an aberration model and minimizes a difference between a simulated intensity profile and a measured intensity profile according to an example embodiment;

FIG. 1C illustrates enhancement sequence that demonstrates aberration mitigation and the consequent recovery of a high-resolution tomographic image according to an example embodiment;

FIG. 2 illustrates comparative analysis using a poly(methyl methacrylate) (PMMA) microbead according to an example embodiment;

FIGS. 3A and 3B illustrate enhanced visualization of pancreatic tissue via aberration correction according to an example embodiment;

FIG. 4 illustrates systematic analysis of aberration acquisition and correction according to an example embodiment;

FIG. 5 is a diagram illustrating a computer device for Fourier space aberration correction for high-resolution refractive index using incoherent light according to an example embodiment; and

FIG. 6 is a flowchart illustrating a method of a computer device for Fourier space aberration correction for high-resolution refractive index using incoherent light according to an example embodiment.

DETAILED DESCRIPTION

Hereinafter, various example embodiments of the present disclosure are described with reference to the accompanying drawings.

In the following, proposed is a versatile method for aberration correction in three-dimensional (3D) phase deconvolution microscopy. An approach of the present disclosure is inspired by techniques used in two-dimensional (2D) differential phase contrast microscopy or ptychography and retrieves aberration from redundant information acquired under various illumination patterns. The present disclosure addresses critical limitations in current microscopy techniques and is particularly essential in analyzing thick tissue samples in which aberrations may significantly distort imaging results. By leveraging redundant information from various illumination patterns, the present disclosure ensures more accurate aberration correction that is crucial for detailed and reliable analysis in biological and medical research. The present disclosure is suitable for complex 3D samples to which traditional methods may not apply, and provides precise and deep insight into 3D structure and dynamics of samples.

**Principle and methods**

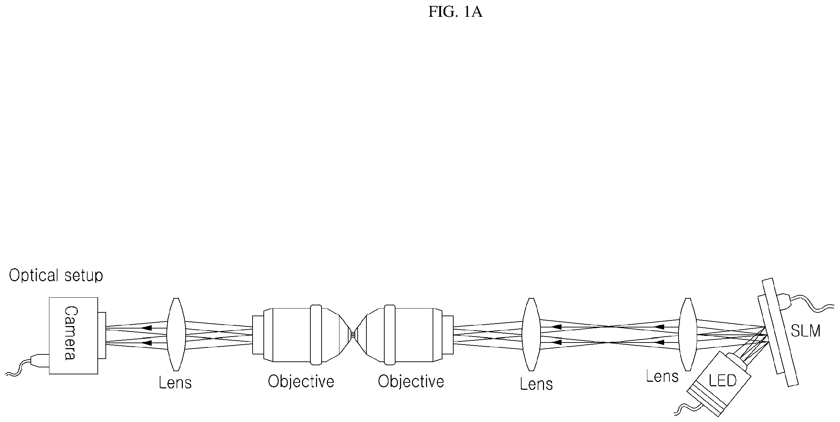

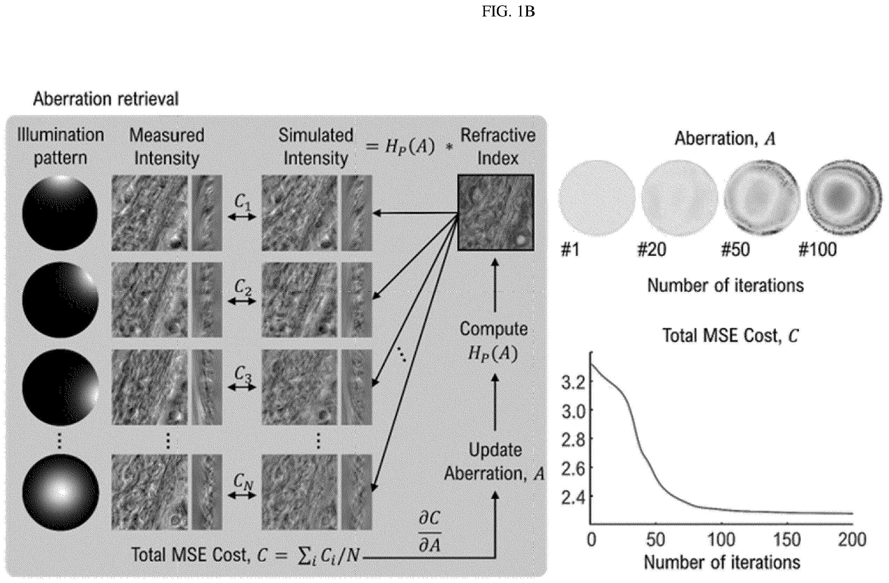

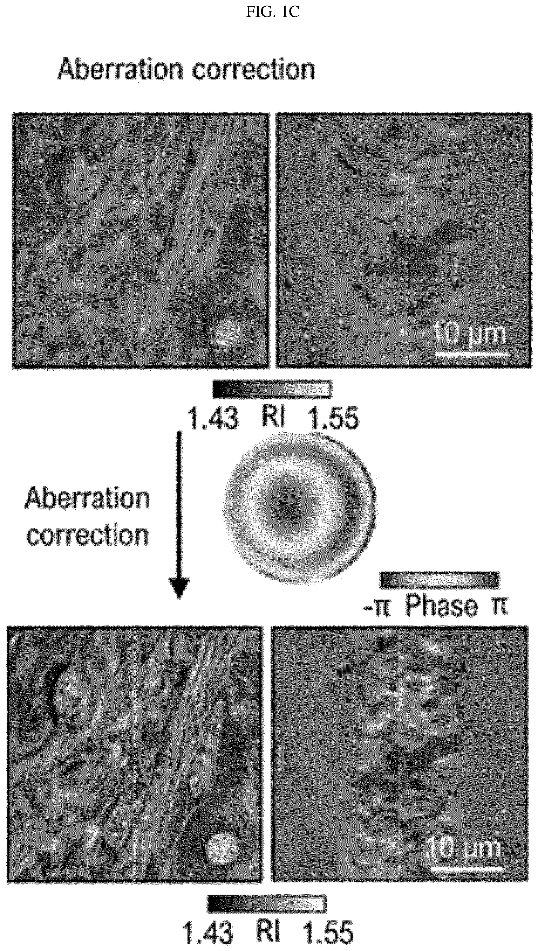

FIG. 1A schematically illustrates an optical setup that represents an optical path through system components according to an example embodiment. FIG. 1B illustrates an aberration extraction process in which a gradient descendent algorithm iteratively refines an aberration model and minimizes an error between a simulated intensity profile and a measured intensity profile according to an example embodiment. FIG. 1C illustrates enhancement sequence that demonstrates aberration mitigation and the consequent recovery of a high-resolution tomographic image according to an example embodiment.

**Aberration in 3D phase deconvolution microscopy**

Approach to aberration correction in 3D phase deconvolution microscopy of the present disclosure initiates with a sample being illuminated via a light emitting diode (LED) light source. This illumination is precisely modulated by a spatial light modulator (SLM) (FIG. 1A). The acquisition of a 3D image stack is accomplished by precise axial scanning of a sample stage. In the domain of phase deconvolution microscopy, restoration of a refractive index is performed through deconvolution using a point spread function (PSF) computed from a specific illumination pattern.

To augment this methodology, the present disclosure provides an algorithm designed to extract Fourier space aberrations from intensities measured under various illumination patterns (FIG. 1B). Within this framework, Fourier space aberrations are expressed as the product of the transmitted light field E and an aberration function $A(k_x, k_y)$ on the microscope's pupil plane. Fourier transform facilitates mathematical expression of aberrations. Then, the transmitted field may be expressed as $\tilde{E} \rightarrow \tilde{E}e^{iA(k_x, k_y)}$.

The normalized transmitted intensity S is approximated as the convolution of scattering potential's real and imaginary parts $F_{Re}$ and $F_{Im}$ with two point spread functions $H_A$ and $H_P$. Here, $F^{-1}$ denotes inverse Fourier transform.

[Equation 1]

$$S = F_{Re} * H_P + F_{Im} * H_A$$

$$H_A = -16\pi^2 \, \mathrm{Re}\left[\mathcal{F}^{-1}\left[\left(\widetilde{G_{obj}}\right) * \left(k_z \, |\rho|^2 \, \widetilde{G^*_{obj}}\right)\right]\right].$$

$$H_P = -16\pi^2 \, \mathrm{Im}\left[\mathcal{F}^{-1}\left[\left(\widetilde{G_{obj}}\right) * \left(k_z \, |\rho|^2 \, \widetilde{G^*_{obj}}\right)\right]\right]$$

The aberration in this model is included in Green function $G_{obj}$.

[Equation 2]

$$\widetilde{G_{obj}} = \widetilde{P_{obj}} \, \widetilde{G}, \quad \widetilde{P_{obj}} = \frac{\sqrt{k_z}}{k} \delta\left(k_x^2 + k_y^2 < NA^2 / \lambda^2\right) \cdot e^{iA\left(k_x, k_y\right)}$$

In phase deconvolution microscopy, the intensity of transmitted light is measured under various patterned illuminations, which is denoted as $|\rho i|^2$. Here, i denotes the sequential number of an illumination pattern. The illuminations provide overlapping data regarding the specimen's characteristics. Typically, a single illumination pattern suffices for reconstructing a shape of a transparent object. However, a minimum of two patterns are required to simultaneously measure the refractive index and absorption properties. Employing an additional illumination pattern may enhance the overall image quality.

An optimization algorithm of the present disclosure identifies optimal Fourier space aberration that aligns redundant information acquired from the sample under diverse illumination conditions. This process involves simulating the anticipated intensity based on the reconstructed refractive index and computing the mean squared error relative to the empirically measured brightness. Subsequently, a gradient descent technique is employed to retrieve the aberration that minimizes this discrepancy. This process is performed as described with FIG. 1B.

**Retrieval of aberration information**

The method of the present disclosure is tailored for transparent objects that yield more redundant information for a set number of illumination patterns and so, facilitates identification of an optimal illumination condition. This scenario may be mathematically represented as $F_{Im} = 0$, but is not limited thereto. That is, the aberration may be retrieved without considering absorption (imaginary part) and the aberration may also be retrieved with considering the absorption (imaginary part). Although most biological samples meet this criterion, it is more important to recognize that details often result in more overlapping information. Although most biological samples meet this criterion, it is important to acknowledge that the phase transfer function has a smaller value at a lower frequency compared to the absorption transfer function. Therefore, the approach of the present disclosure determines aberrations using high-frequency information and thus, may be applied to various biological samples.

Mathematically, an optimization problem may be expressed as follows:

[Equation 3]

$$A_{optimal} = \arg\min_{A}\{C(A)\}, \quad C(A) = \sum_i \|\varepsilon_i\|_2^2, \quad \varepsilon_i(A) = S_i - F_{Re} * H_{P,i}(A)$$

$$H_{P,i}(A) = -16\pi^2 \, \text{Im}\left[\mathcal{F}^{-1}\left[\left(\widetilde{G_{obj}}(A)\right)*\left(k_z |\rho_i|^2 \widetilde{G_{obj}}^*(A)\right)\right]\right]$$

$$\widetilde{G_{obj}}(A) = \widetilde{P_{obj}}(A)\widetilde{G}, \quad \widetilde{P_{obj}}(A) = \frac{\sqrt{k_z}}{k}\delta(k_x^2 + k_y^2 < NA^2/\lambda^2)\cdot e^{iA(k_x,k_y)}$$

$$F_{Re} = \mathcal{F}^{-1}\left[\sum_i \widetilde{S_i}\,\widetilde{H_{P,i}}^*(A) \Big/ \sum_i \left|\widetilde{H_{P,i}}(A)\right|^2\right]$$

Here, i denotes a number of an illumination pattern, $A_{optimal}$ denotes an optimal aberration that best describes the observed transmitted intensity, and C(A) denotes a cost function to be optimized. This optimization problem is solved using a Fast Iterative Shrinkage-Thresholding Algorithm (FISTA) method among gradient descent methods. To facilitate gradient (differential) computation, the present disclosure represents the field and the scattering potential on a discrete grid and converts 3D quantity into a vectorized array. Therefore, Fourier transform is treated as discrete Fourier transform that is expressed as matrix multiplication. For a given discretized vector B, such as the field or the scattering potential, its Fourier transform B=UB is expressed using a matrix with Fourier basis vectors U. Equivalently, the inverse Fourier transform is given by $B = U^{-1}\tilde{B}$. The optimization problem may be written as follows:

[Equation 4]

$$A_{optimal} = \arg\min_{A}\{C(A)\}, \quad C(A) = \sum_i \left\|\tilde{\varepsilon}_i\right\|_2^2, \quad \tilde{\varepsilon}_i(A) = \tilde{S}_i - \text{diag}(\widetilde{H_{P,i}})\widetilde{F_{Re}}$$

$$\widetilde{H_{P,i}}(A) = 16i\pi^2 U\left(\text{diag}\left(U^{-1}\widetilde{G_{obj}}\right)U\text{diag}(k_z)\text{diag}(|\rho_i|^2)\widetilde{G_{obj}}^* - \text{diag}\left(U\widetilde{G_{obj}}^*\right)U^{-1}\text{diag}(k_z)\text{diag}(|\rho_i|^2)\widetilde{G_{obj}}\right)$$

$$\widetilde{G_{\pm obj}}(A) = \text{diag}(\widetilde{P_{obj}})\widetilde{G}, \quad \widetilde{P_{obj}}(A,k_x,k_y) = \frac{\sqrt{k_z}}{k}\delta(k_x^2 + k_y^2 < NA^2/\lambda^2)\cdot e^{iA(k_x,k_y)}$$

$$\widetilde{F_{Re}}(A) = \sum_i \text{diag}\left(\widetilde{H_{P,i}}^*\right)\tilde{S}_i \Big/ \sum_i \text{diag}\left(\left|\widetilde{H_{P,i}}\right|^2\right)$$

Here, note that the diag(B) function is used to form a diagonal matrix of which diagonal elements are elements of B. In contrast to previous equations, here all multiplications are matrix multiplications. To perform optimization, the gradient of the cost function with respect to aberration vectors needs to be computed: $\nabla_A(C(A))$. The discretized formulation of the present disclosure uses properties of matrix differentiation to compute the gradient. Using the chain rule formula for the gradient of the norm, the gradient of the cost function may be expressed in the following form.

[Equation 5]

$$\nabla_A C(A) = 2\,\text{Re}\left[-\sum_j \left(\frac{\partial \widetilde{H_{P,j}}}{\partial A}\right)^H \text{diag}\left(\widetilde{F_{Re}}^*\right)\varepsilon_j - \sum_i \left(\frac{\partial \widetilde{H_{P,i}}^*}{\partial A}\right)^H \text{diag}\left(\tilde{S}_i^*\right)\frac{\sum_j \text{diag}(\widetilde{H_{P,j}}^*)\varepsilon_j}{\sum_k \text{diag}\left(\left|\widetilde{H_{P,k}}\right|^2\right)}\right.$$

$$\left.+\sum_i \left(\left(\frac{\partial \widetilde{H_{P,i}}}{\partial A}\right)^H \text{diag}\left(\widetilde{H_{P,i}}\right) + \left(\frac{\partial \widetilde{H_{P,i}}^*}{\partial A}\right)^H \text{diag}\left(\widetilde{H_{P,i}}^*\right)\right)\text{diag}(\widetilde{F_{Re}}^*)\frac{\sum_j \text{diag}(\widetilde{H_{P,j}}^*)\varepsilon_j}{\sum_k \text{diag}\left(\left|\widetilde{H_{P,k}}\right|^2\right)}\right]$$

$$\left(\frac{\partial \widetilde{H_{P,j}}}{\partial A}\right)^H = 32\pi^2 P_i \,\text{Re}\left[\text{diag}\left(\widetilde{G_{obj}}\right)\text{diag}\left(\left|\tilde{\rho}_i\right|^2\right)\text{diag}(k_z)U^{-1}\text{diag}\left(U\widetilde{G_{obj}}^*\right) - \text{diag}\left(\widetilde{G_{obj}}^*\right)U\text{diag}\left(U^{-1}\text{diag}(k_z)\text{diag}\left(\left|\tilde{\rho}_i\right|^2\right)\widetilde{G_{obj}}\right)\right]U^{-1}$$

$$\left(\frac{\partial \widetilde{H_{P,j}}^*}{\partial A}\right)^H = 32\pi^2 P_i \,\text{Re}\left[-\text{diag}\left(\widetilde{G_{obj}}^*\right)\text{diag}\left(\left|\tilde{\rho}_i\right|^2\right)\text{diag}(k_z)U\text{diag}\left(U^{-1}\widetilde{G_{obj}}\right) + \text{diag}\left(\widetilde{G_{obj}}\right)U^{-1}\text{diag}\left(U\text{diag}(k_z)\text{diag}\left(\left|\tilde{\rho}_i\right|^2\right)\widetilde{G_{obj}}^*\right)\right]U$$

To recover the phase of the aberration, FISTA is implemented without using a regularization term. The reason of excluding regularization is due to its tendency to confine optimization within local minima as a result of the phase's modulo nature of $2\pi$ period. After the optimization, a low-pass filter is applied to an aberration image to mitigate high-frequency noise. Considering a circular configuration of the aberration image, a process of iteratively performing low-pass filtering and enforcing circular symmetry over 2000 iterations with the observed aberration pattern on the circle is performed.

After aberration retrieval, reconstruction of the refractive index is performed. Here, considering both real and imaginary parts, the algorithm is used. To mitigate artifacts stemming from 'missing cone problem', an inherent issue in tomographic reconstruction, total variation regularization is incorporated into the process of the present disclosure.

To increase computational efficiency, the present disclosure performed an optimization process on a graphics processing unit (GPU) using MATLAB's parallel computing toolbox. For example, 100 FISTA iterations on a 701X701X79 pixel volume were completed in just 202 seconds using an NVIDIA RTX 3090 GPU. This approach synergizes computational algorithms with advanced imaging methods, optimizing aberration correction in 3D phase deconvolution microscopy, especially for complex or dense samples.

**Experimental setup**

To demonstrate the method of the present disclosure, a specially constructed phase deconvolution microscopy setup was used. The illumination pattern was controlled on the pupil plane of the microscope using a ferroelectric spatial light modulator (Forth dimension display M150). The illumination was projected on the sample using a high numerical aperture (NA) condenser lens (Olympus UPLSAPO60XW, NA 1.2). Then, scattered light was collected by an objective lens (Olympus UPLSAPO60XW, NA 1.2) and projected to form an image on the camera using an achromatic tube lens. The experimental setup is schematically presented in FIG. 1A. In other experiments, the object lens and the condenser lens were changed to a slightly lower NA lens (Olympus LUMFLN60XW, NA 1.1), which exhibited reduced coma aberration. Once the aberrated point spread function was found, final refractive index reconstruction was performed using deconvolution and total variation regularization.

**Sample preparation**

Formalin fixed-paraffin embedded pancreatic tissue slides were acquired after approval from the Institutional Review Board (IRB) with waiver of informed consent from patients. The tissues were processed according to standard histopathological procedures except for a staining process. Sections were cut to the thickness of 10 $\mu$m and 20 $\mu$m. Then, the samples were mounted on cover glass slide for imaging.

**Results**

**Validation with microscope**

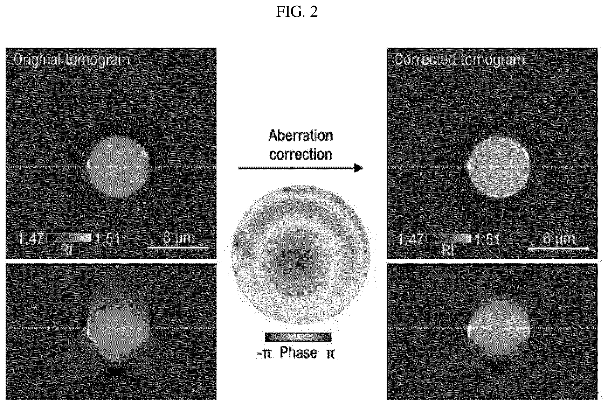

The methodology of the present disclosure was initially verified using a synthetic reference sample, specifically, an 8-$\mu$m-diameter poly(methyl methacrylate) (PMMA) microbead (FIG. 2).

FIG. 2 illustrates comparative analysis using a PMMA microbead according to an example embodiment. In FIG. 2, the left panel shows the original tomogram of an 8-$\mu$m-diameter PMMA microbead embedded in UV-cure resin. The expected spherical outline is represented as dashed lines for reference. In FIG. 2, the right panel shows the corrected tomogram after aberration correction and the central inset shows the restored aberration. The tomogram after the aberration correction was closer to the expected spherical geometry of the microbead. Also, it demonstrates a substantial reduction in 'missing cone' artifacts, recognizable as X-shaped distortion at the periphery and base of the microbead in the vertical cross-section. This improvement suggests that applying total variation regularization to a more precise signal enhances the mitigation of these artifacts.

**Application to histology samples**

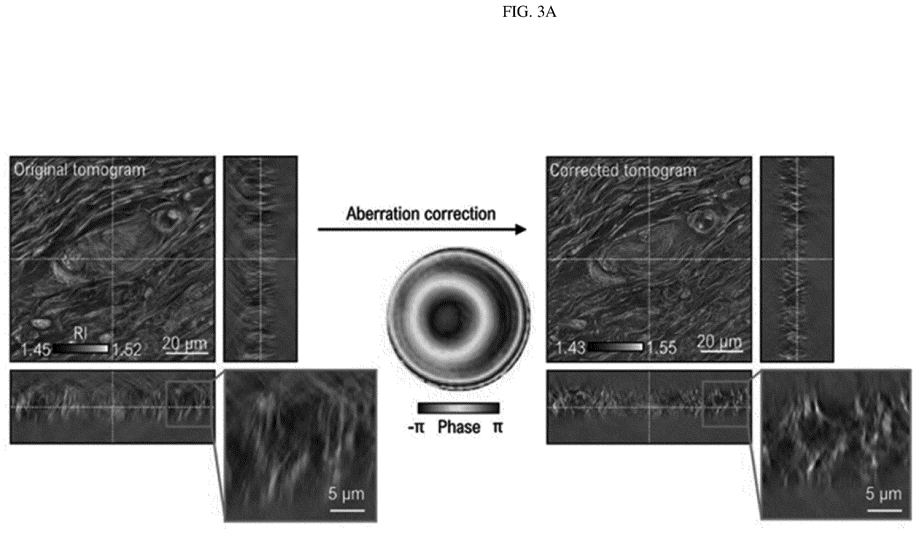

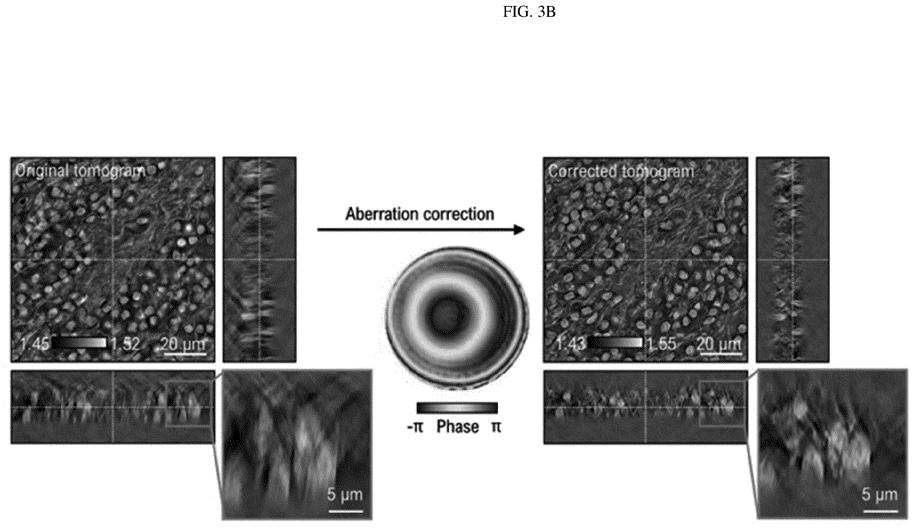

To evaluate the effectiveness of the method of the present invention in more complex samples with pronounced aberrations, the aberration correction algorithm of the present disclosure was applied to pancreatic tissue sections. FIGS. 3A and 3B illustrate enhanced visualization of pancreatic tissue via aberration correction according to an example embodiment. In FIGS. 3A and 3B, the left panel shows the original tomogram and the right panel shows the corrected tomogram. The central inset shows the restored aberration. The sections were sliced to the thickness of 10 $\mu$m. FIGS. 3A and 3B highlight the substantial enhancement in image quality after correction. In the initial tomogram, distortion artifacts due to aberrations significantly obscured the tissue's upper and lower boundaries, which makes it difficult to distinguish the upper and lower boundaries. However, after correction, the boundaries are sharply defined and accurately reflect the 10 $\mu$m thickness of the tissue.

Notable enhancement is also observed in image contrast after correction. According to analysis, refractive index of the tissue relative to the background in the corrected image is nearly 50% higher than that in the original image. Aberration in phase deconvolution microscopy may lead to destructive interference of a scattered signal, resulting in decreasing intensity contrast and causing the refractive index to be measured lower than it actually is. The corresponding phenomenon has been reported in earlier studies. Even in this analysis, it is estimated that the refractive index contrast was lower due to aberration. The correction process not only clarifies features in the vertical plane but also significantly improves the overall resolution of the image. Also, as shown in FIGS. 3A and 3B, the uniformity of aberrations across different regions of the same optical system and the same sample shows the reliability of the aberration correction method of the present disclosure.

**Systematic analysis of aberration correction**

To further evaluate the algorithm's performance of the present disclosure under conditions of controlled aberration, experiments were conducted to determine its precision in detecting artificially induced spherical aberrations and its effectiveness in correcting aberrations of refractive index tomogram. Various degrees of spherical aberrations using the objective lens's correction collar were deliberately introduced, mimicking real-world imaging situations in which aberrations are present due to an optical system. The correction collar settings ranged from 0.3 mm to 1.1 mm in target focus depth, and measurement was carried at a fixed axial position of the pancreatic tissue sample.

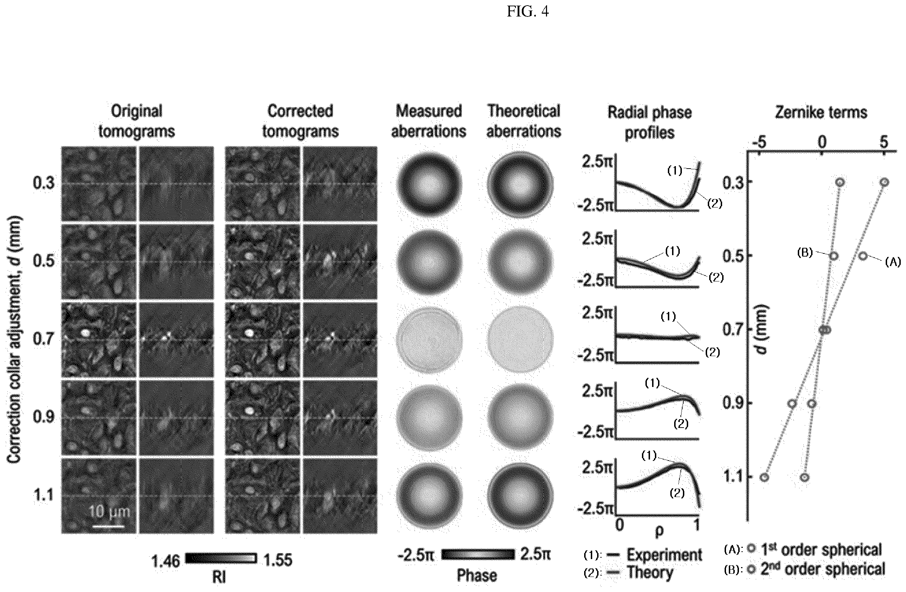

FIG. 4 illustrates systematic analysis of aberration acquisition and correction according to an example embodiment, and illustrates refractive index reconstruction improvement by aberration extraction results and aberration correction in a situation in which various intensities of spherical aberration, generated through a correction collar, are present. The leftmost panel displays refractive index tomographic slices at progressive depths, marked with a 10 $\mu$m scalebar for reference. The central column exhibits phase maps corresponding to various levels of spherical aberration. The rightmost graphs plot Zernike coefficients for first and second-order spherical aberrations, offering a quantitative insight into an aberration retrieval process. As described above, FIG. 4 presents the algorithm's response to various levels of spherical aberration, with each row representing a different correction collar setting. Although substantial spherical aberration significantly degraded refractive index image quality, it was verified that the image quality was effectively improved with aberration correction through the algorithm of the present disclosure. The radial phase profile of aberrations identified by the algorithm of the present disclosure was almost matched to the theoretically computed phase profile. For more accurate comparison, 2D phase profile was compared in a phase unwrapped format. As anticipated, Zernike coefficients for first and second-order spherical aberrations displayed a linear relationship with the scale of the correction collar.

The experimental results are also consistent with theoretical computation of a point at which spherical aberrations caused due to refractive index discrepancy is minimized. The minimal aberration was observed at d = 0.7 mm. This result is attracted to the disparity between the refractive index of the pancreatic tissue mounting medium and cover glass (1.5) and the 1.36 refractive index for which the lens's correction collar is calibrated and is consistent with theoretical computation results.

<u>**Summary**</u>

The present disclosure successfully developed and validated a method for aberration correction in 3D phase deconvolution microscopy. Through effective application on artificial standard samples and biological thick samples, the method of the present disclosure markedly improved axial resolution and addressed the issue of RI underestimation. Precision in aberration extraction was confirmed through experiments in which the spherical aberrations of the optical system were artificially controlled, and the acquired aberration phase profiles were consistent with theoretical expectations.

The method of the present disclosure provides several advantages in an optical imaging system. First, the method may extract all of system-induced and sample-induced aberrations even when a sample is present. This is particularly beneficial for large histopathological samples in which aberrations may vary based on a position of a sample. In addition, aberration removal may be digitally performed only with measured specimen data without a separate additional experiment, which allows application potential in various samples and aberration correction even on data for which measurement is already completed.

Also, the iterative nature of the algorithm demands a substantial computational amount. The present disclosure significantly improved computational efficiency by utilizing GPU capability for faster data processing. To further accelerate this process, two strategies are proposed. First, aberrations, which are often consistent within a single sample as seen in pancreatic tissue imaging, may be measured once and then applied across all fields of view of the corresponding sample. Second, to increase a computational speed, aberrations may be identified in a smaller sub-volume and the entire field of view may be corrected by estimating aberrations according to regions.

The method of the present disclosure shows considerable promise for wide field-of-view microscopes, commonly employed in histology and medical imaging. These microscopes, typically featuring low-magnification and high numerical aperture lenses, are susceptible to spatially non-uniform aberrations, especially near the field's periphery. The method of the present disclosure is applicable in this situation since the method may effectively correct spatially various aberrations by correcting aberrations in individual sub-volume positions.

Hereinafter, a method and device for Fourier space aberration correction for high-resolution refractive index using incoherent light are described.

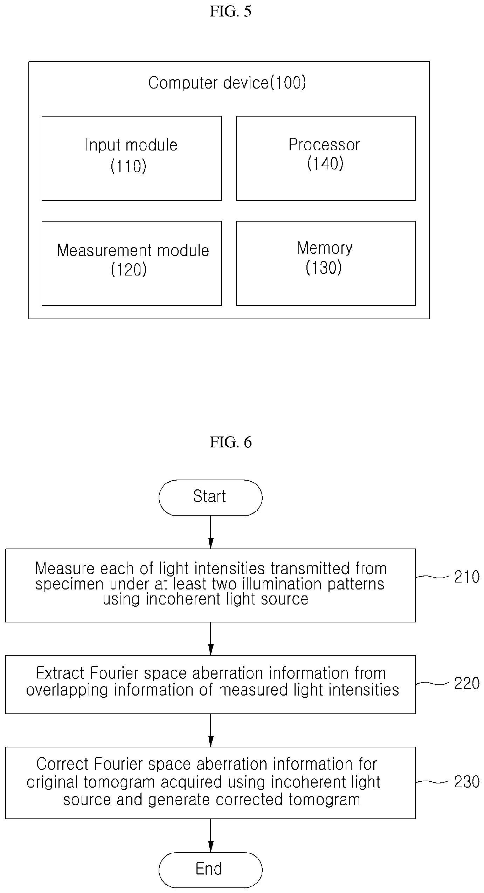

FIG. 5 is a diagram illustrating a computer device 100 for Fourier space aberration correction for high-resolution refractive index using incoherent light according to an example embodiment.

Referring to FIG. 5, the computer device 100 may include at least one of an input module 110, an output module 120, a memory 130, and a processor 140. In some example embodiments, at least one of the components of the computer device 100 may be omitted, and at least one another component may be added. In some example embodiments, at least two of the components of the computer device 100 may be implemented as a single integrated circuit. In some example embodiments, the computer device 100 may include 3D phase deconvolution microscopy.

The input module 110 may input a signal to be used for at least one component of the computer device 100. The input module 110 may be configured to detect a signal directly input by a user or to generate a signal by detecting a change in surroundings. For example, the input module 110 may include at least one of a microphone, at least one physical button, and a touch pad. Meanwhile, the input module 110 may include a reception device configured to receive a signal from an external device. The reception device is further described below.

The output module 120 may output information to the outside of the computer device 100. The output module 120 may be implemented as a tactile display for providing a tactile interface. To this end, the output module 120 may include at least one of a display module configured to visually output information and an audio output module configured to auditorily output the information. For example, the audio output module may include at least one of a speaker and a receiver. Meanwhile, the output module 120 may include at least one transmission device capable of wirelessly transmitting information. The transmission device is further described below.

According to some example embodiments, the reception device and the transmission device may be implemented as a communication module. The communication module may perform communication with the external device in the computer device 100. The communication module may establish a communication channel between the computer device 100 and the external device and may perform communication with the external device through the communication channel. The communication module may include at least one of a wired communication module and a wireless communication module. The wired communication module may be connected to the external device in a wired manner and may communicate therewith in a wired manner. The wireless communication module may include at least one of a near-field communication module and a far-field communication module. The near-field communication module may communicate with the external device using a near-field communication method. For example, the near-field communication method may include at least one of Bluetooth, WiFi direct, and infrared data association (IrDA). The far-field communication module may communicate with the external device using a far-field communication method. Here, the far-field communication module may communicate with the external device over a network. For example, the network may include at least one of a cellular network, Internet, and a computer network such as a local area network (LAN) and a wide area network (WAN).

The memory 130 may store a variety of data used by at least one component of the computer device 100. For example, the memory 130 may include at least one of a volatile memory and a non-volatile memory. Data may include at least one program and input data or output data related thereto. The program may be stored in the memory 130 as software including at least one instruction and may include at least one of OS, middleware, and application.

The processor 140 may control at least one component of the computer device 100 by executing the program of the memory 130. Through this, the processor 140 may perform data processing or operation. Here, the processor 140 may execute the instruction stored in the memory 130. The processor 140 may measure each of light intensities transmitted from samples under at least two illumination patterns using an incoherent light source. To this end, the processor 140 may include a measurement module with the optical setup as shown in FIG. 1A, for example, 3D phase deconvolution microscopy, or may be connected thereto. Here, the measurement module may include an incoherent light source, and a spatial light modulator (SLM) configured to generate illumination patterns by adjusting light from the incoherent light source. Therefore, the processor 140 may extract Fourier space aberration information from overlapping information of the measured light intensities. Therefore, the processor 140 may be configured to correct Fourier space aberration information for the original tomogram acquired using the incoherent light source and to generate the corrected tomogram.

FIG. 6 is a flowchart illustrating a method of the computer device 100 for Fourier space aberration correction for high-resolution refractive index using incoherent light according to an example embodiment.

Referring to FIG. 6, in operation 210, the computer device 100 may measure each of light intensities transmitted from a specimen under at least two illumination patterns using an incoherent light source. To this end, the processor 140 may include a measurement module with the optical setup as shown in FIG. 1A, for example, 3D phase deconvolution microscopy, or may be connected thereto. Here, the measurement module may include an incoherent light source, and a space light modulator (SLM) configured to generate illumination patterns by adjusting light from the incoherent light source. As shown in FIG. 1B, the processor 140 may measure each of the light intensities transmitted from the specimen under different illumination patterns.

In operation 220, the computer device 100 may extract Fourier space aberration information from overlapping information of the measured light intensities. Here, the processor 140 may extract Fourier space aberration information through a procedure as shown in FIG. 1B. In detail, the processor 140 may compute the refractive index through deconvolution of point spread functions inferred from the illumination patterns. Then, the processor 140 may simulate anticipated light intensities corresponding to the measured light intensities, respectively, based on the refractive index. Then, the processor 140 may extract Fourier space aberration information that minimizes discrepancy between the measured light intensities and the anticipated light intensities that correspond to each other. Here, the processor 140 may extract the Fourier space aberration information that minimizes the discrepancy by iteratively using a gradient descent method.

In operation 230, the computer device 100 may correct the Fourier space aberration information for an original tomogram acquired using the incoherent light source and may generate the corrected tomogram. Here, the processor 140 may effectively generate the corrected tomogram for the original tomogram on synthetic and biological thick samples. As described above, the processor 140 ensures more accurate aberration correction, crucial for detailed and reliable analysis in biological and medical research.

The present disclosure addresses critical limitations in current microscopy techniques and is particularly essential in analyzing thick tissue samples in which aberrations may significantly distort imaging results. By leveraging redundant information from various illumination patterns, the present disclosure ensures more accurate aberration correction that is crucial for detailed and reliable analysis in biological and medical research. The present disclosure is suitable for complex 3D samples to which traditional methods may not apply, and provides precise and deep insight into 3D structure and dynamics of samples.

Various example embodiments and the terms used herein are not construed to limit description disclosed herein to a specific implementation and should be understood to include various modifications, equivalents, and/or substitutions of a corresponding example embodiment. In the drawings, like reference numerals refer to like components throughout the present specification. The singular forms "a," "an," and "the" are intended to include the plural forms as well, unless the context clearly indicates otherwise. Herein, the expressions, "A or B," "at least one of A and/or B," "A, B, or C," "at least one of A, B, and/or C," and the like may include any possible combinations of listed items. Terms "first," "second," etc., are used to describe corresponding components regardless of order or importance and the terms are simply used to distinguish one component from another component. The components should not be limited by the terms. When a component (e.g., first component) is described to be "(functionally or communicatively) connected to" or "accessed to" another component (e.g., second component), the component may be directly connected to the other component or may be connected through still another component (e.g., third component).

According to various example embodiments, each of the components may include a singular object or a plurality of objects. According to various example embodiments, at least one of the components or operations may be omitted. Alternatively, at least one another component or operation may be added. Alternatively or additionally, a plurality of components may be integrated into a single component. In this case, the integrated component may perform one or more functions of each of the components in the same or similar manner as it is performed by a corresponding component before integration.

**Claims**

1. A method for Fourier space aberration correction for three-dimensional (3D) high-resolution refractive index imaging using incoherent light of a computer device, the method comprising:

   measuring each of light intensities transmitted from a specimen under at least two illumination patterns using an incoherent light source;
   extracting Fourier space aberration information from overlapping information of the measured light intensities; and
   correcting the Fourier space aberration information for an original tomogram acquired using the incoherent light source and generating the corrected tomogram.

2. The method of claim 1, wherein the extracting of the Fourier space aberration information comprises:

   computing a refractive index through deconvolution of point spread functions inferred from the illumination patterns;
simulating anticipated light intensities corresponding to the measured light intensities, respectively, based on the refractive index; and
extracting the Fourier space aberration information that minimizes discrepancy between the measured light intensities and the anticipated light intensities that correspond to each other.

3. The method of claim 2, wherein the extracting of the Fourier space aberration information comprises extracting the Fourier space aberration information that minimizes the discrepancy by iteratively using a gradient descent method.

4. The method of claim 1, wherein the computer device includes 3D phase deconvolution microscopy.

5. The method of claim 1, wherein the illumination patterns are generated by adjusting light from the incoherent light source by a spatial light modulator (SLM).

6. A device for Fourier space aberration correction for three-dimensional (3D) high-resolution refractive index imaging using incoherent light, the device comprising:

   a memory; and
   a processor configured to connect to the memory and to execute at least one instruction stored in the memory, wherein the processor is configured to,
   measure each of light intensities transmitted from a specimen under at least two illumination patterns using an incoherent light source,
   extract Fourier space aberration information from overlapping information of the measured light intensities, and
   correct the Fourier space aberration information for an original tomogram acquired using the incoherent light source and generate the corrected tomogram.

7. The device of claim 6, wherein the processor is configured to,

   compute a refractive index through deconvolution of point spread functions inferred from the illumination patterns,
   simulate anticipated light intensities corresponding to the measured light intensities, respectively, based on the refractive index, and
   extract the Fourier space aberration information that minimizes discrepancy between the measured light intensities and the anticipated light intensities that correspond to each other.

8. The device of claim 7, wherein the processor is configured to extract the Fourier space aberration information that minimizes the discrepancy by iteratively using a gradient descent method.

9. The device of claim 6, further comprising:
   3D phase deconvolution microscopy configured to measure each of the light intensities.

10. The device of claim 6, further comprising:

   the incoherent light source; and
   a spatial light modulator (SLM) configured to generate the illumination patterns by adjusting light from the incoherent light source.

FIG. 1A

FIG. 1B

Aberration retrieval

Illumination pattern

Measured Intensity

Simulated Intensity $= H_P(A)$ *

Refractive Index

$C_1$

$C_2$

$C_3$

$C_N$

Compute $H_P(A)$

Update Aberration, $A$

$\dfrac{\partial C}{\partial A}$

Total MSE Cost, $C = \sum_i C_i / N$

Aberration, $A$

#1    #20    #50    #100

Number of iterations

Total MSE Cost, $C$

EP 4 610 710 A1

FIG. 1C

FIG. 2

FIG. 3A

EP 4 610 710 A1

FIG. 3B

FIG. 4

FIG. 5

Computer device(100)

| Input module (110) | Processor (140) |
|---|---|
| Measurement module (120) | Memory (130) |

FIG. 6

Start

Measure each of light intensities transmitted from specimen under at least two illumination patterns using incoherent light source — 210

Extract Fourier space aberration information from overlapping information of measured light intensities — 220

Correct Fourier space aberration information for original tomogram acquired using incoherent light source and generate corrected tomogram — 230

End

Europäisches
Patentamt

European
Patent Office

Office européen
des brevets

# EUROPEAN SEARCH REPORT

**Application Number**

EP 25 15 0153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN MICHAEL ET AL: "Quantitative differential phase contrast (DPC) microscopy with computational aberration correction", OPTICS EXPRESS, vol. 26, no. 25, 30 November 2018 (2018-11-30), page 32888, XP093290592, US ISSN: 1094-4087, DOI: 10.1364/OE.26.032888 Retrieved from the Internet: URL:https://www.osapublishing.org/viewmedia.cfm?URI=oe-26-25-32888> * the whole document * | 1-10 | INV. G02B21/06 G02B21/36 |
| A | MICHAEL CHEN ET AL: "3D differential phase contrast microscopy", BIOMEDICAL OPTICS EXPRESS, vol. 7, no. 10, 1 October 2016 (2016-10-01), page 3940, XP055658383, United States ISSN: 2156-7085, DOI: 10.1364/BOE.7.003940 * the whole document * | 1-10 | |
| | | | TECHNICAL FIELDS SEARCHED (IPC) |
| | | | G02B |
| X,P | CHUNG YOONJAE ET AL: "Fourier space aberration correction for high resolution refractive index imaging using incoherent light", OPTICS EXPRESS, vol. 32, no. 11, 7 May 2024 (2024-05-07), page 18790, XP093289897, US ISSN: 1094-4087, DOI: 10.1364/OE.518479 * the whole document * | 1-10 | |

-/--

The present search report has been drawn up for all claims

| Place of search | Date of completion of the search | Examiner |
|---|---|---|
| Munich | 30 June 2025 | Politsch, Erich |

EPO FORM 1503 03.82 (P04C01)

page 1 of 2

| | Europäisches Patentamt European Patent Office Office européen des brevets | **EUROPEAN SEARCH REPORT** | Application Number EP 25 15 0153 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHUNGHA LEE ET AL: "Single-shot refractive index slice imaging using spectrally multiplexed optical transfer function reshaping", ARXIV.ORG, CORNELL UNIVERSITY LIBRARY, 201 OLIN LIBRARY CORNELL UNIVERSITY ITHACA, NY 14853, 13 January 2023 (2023-01-13), XP091416957, * the whole document * ----- | 1-10 | |
| A | HERVE HUGONNET ET AL: "Quantitative phase and refractive index imaging of 3D objects via optical transfer function reshaping", ARXIV.ORG, CORNELL UNIVERSITY LIBRARY, 201 OLIN LIBRARY CORNELL UNIVERSITY ITHACA, NY 14853, 21 January 2022 (2022-01-21), XP091134754, * the whole document * ----- | 1-10 | |
| | | | TECHNICAL FIELDS SEARCHED (IPC) |

The present search report has been drawn up for all claims

| Place of search | Date of completion of the search | Examiner |
|---|---|---|
| Munich | 30 June 2025 | Politsch, Erich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)